# EUROPÄISCHE PATENTSCHRIFT

(11) **EP 3 109 500 B1**
(45) Veröffentlichungstag und Bekanntmachung des Hinweises auf die Patenterteilung: **12.09.2018**
(21) Anmeldenummer: 16168112.7
(22) Anmeldetag: 03.05.2016
(51) Int. Cl.: F16F 1/12, B60G 11/14

(54) **FEDERANORDNUNG UND VERFAHREN ZUR HERSTELLUNG EINER FEDERANORDNUNG**
SPRING ASSEMBLY AND METHOD FOR MANUFACTURING A SPRING ASSEMBLY
SYSTEME DE RESSORT ET PROCEDE DE FABRICATION D'UN SYSTEME DE RESSORT

(30) Priorität: 15.05.2015 DE 102015208978
(43) Veröffentlichungstag der Anmeldung: 28.12.2016
(73) Patentinhaber: Muhr und Bender KG, 57439 Attendorn (DE)
(72) Erfinder: Teichmann, Gregor, 57072 Siegen (DE); Ditzer, Boris, 57399 Würdinghausen (DE); Kriese, Hans-Ulrich, 99631 Weißensee (DE)
(74) Vertreter: Neumann Müller Oberwalleney & Partner Patentanwälte

(56) Entgegenhaltungen:
- WO-A1-2015/146263
- DE-A1-102008 025 905
- DE-A1-102011 002 065
- JP-A- 2000 304 079
- JP-A- 2002 130 351

## Beschreibung

Die Erfindung betrifft eine Federanordnung mit einer Feder, insbesondere für ein Fahrwerk eines Kraftfahrzeugs, sowie ein Verfahren zur Herstellung einer Federanordnung. Derartige Federanordnungen umfassen üblicherweise eine Federaufnahme, in dem ein Windungsende der Feder aufgenommen ist.

Aus der DE 2 063 786 A1 ist eine Teleskopfeder aus einem fortlaufenden Band aus federndem Material bekannt, das schraubenförmig auf sich selbst aufgewickelt ist. Die Endwindungen der Feder sind an jeweils einer zylindrischen Fläche eines Anschlussflanschs angeklebt. Das zur Herstellung der Feder verwendete Band kann aus Federstahl oder Kunststoff hergestellt sein. Auch eine Beschichtung der Feder, beispielsweise mit Teflon, ist möglich.

Aus der WO 2015/146263 A1 ist eine Feder mit einer Beschichtung bekannt, die mittels einer Klebeschicht mit einem Isolierband verbunden ist.

Aus der JP 2000304079 A ist eine Feder-Dämpfer-Anordnung mit einer Schraubenfeder bekannt, auf deren dämpferseitigem Endabschnitt ein geschlitztes Rohr aus einem synthetischen Kunstharzmaterial aufgezogen ist.

Aus der JP 2002130351 A1 ist eine Anordnung mit einer Schraubenfeder und einem Federsitz bekannt. Die Schraubenfeder ist mit ihrem oberen Ende an ein Gummiteil anvulkanisiert, das an einem Fahrzeugteil abgestützt ist.

Aus der DE 10 2011 002 065 A1 ist eine Lageranordnung für eine Feder bekannt. Die Lageranordnung weist eine ringartige Federbeilage aus einem flexiblen Elastomer auf, in der ein Teil einer Federwindung der Feder aufgenommen ist. Dabei ist zwischen der Feder und der Federbeilage ein Klebstoff eingebracht, so dass die Verbindung der Federbeilage mit der Feder eine Klebeverbindung aufweist. Der Klebstoff ist bei Raumtemperatur aushärtbar.

Aus der EP 1 165 331 B1 ist eine Anordnung mit einer Schraubenfeder und einem Stützlager für Federbeine bekannt. Federbeine für Kraftfahrzeuge umfassen einen Stoßdämpfer, der an seinem oberen Ende mit der Fahrzeugkarosserie und an seinem unteren Ende mit dem Radachsschenkel verbunden ist, sowie eine Schraubenfeder.

Das untere Ende der Schraubenfeder ist über einen Schraubenfedersitz mit dem Stoßdämpfer verbunden. Die oberste Endwindung der Schraubenfeder wird von einem Stützlager aufgenommen.

Die Verbindungsstelle zwischen der Feder und der Federaufnahme eines Fahrwerks ist sicherheitsrelevant. Im Einsatz können sich Partikel wie kleine Steine zwischen die Endwindung der Achsfeder und die Achsfederunterlage setzen. Dies kann aufgrund der Relativbewegung zwischen den genannten Bauteilen zu einer Beschädigung des die Feder schützenden Lacks und damit zu Korrosion der Feder führen.

Der vorliegenden Erfindung liegt die Aufgabe zugrunde, eine Federanordnung mit einer Feder und einer Federaufnahme vorzuschlagen, insbesondere für ein Fahrwerk eines Kraftfahrzeugs, die einen guten Widerstand gegen Verschleiß und damit eine lange Lebensdauer aufweist. Die Aufgabe besteht ferner darin, ein entsprechendes Verfahren zur Herstellung einer Federanordnung vorzuschlagen.

Eine Lösung besteht in einer Federlageranordnung umfassend: eine Feder mit einer Beschichtung, eine Federaufnahme, die aus einem Kunststoff besteht, eine Klebeschicht, mit der die Feder und die Federaufnahme miteinander klebend verbunden sind, wobei die Härte der Klebeschicht geringer ist als die Härte der Beschichtung.

Ein Vorteil besteht darin, dass die verhältnismäßig weiche Klebeschicht im Belastungsfall einen Teil der in die Anordnung eingeleiteten Energie unter elastischer Verformung aufnehmen kann. Es wird ein günstiger Dehnungsgradient erreicht, da der Kleber zwischen der Beschichtung der Feder und der elastischen Federaufnahme eine flexible Schicht bildet. Insbesondere wird die Beanspruchung in der Grenzschicht zwischen der Federaufnahme und dem Klebstoff gesenkt. Somit liegen in diesem Verbindungsbereich zwischen der Klebeschicht und der Federaufnahme verhältnismäßig geringe Verzerrungen vor, so dass ein belastungsbedingter Verschleiß besonders gering ist. Außerdem verhindert die gegenüber der Federbeschichtung weichere Klebeschicht, dass die Federbeschichtung bei hohen Belastungen beschädigt wird.

Mit Härte der Klebeschicht ist die messbare Härte der Klebeschicht in ausgehärtetem Zustand des Klebers gemeint. Zur Messung der Härte kann beispielsweise die Indentationsmethode verwendet werden. Bei dieser Methode dringt ein Eindringkörper, auch Indenter genannt, definierter Geometrie in das zu untersuchende Material ein, wobei der Werkstoff des Indenters wesentlich härter ist als die Probe selbst. Unabhängig von der Geometrie des Eindringkörpers ist jeder Eindringtiefe eine Kraft zuzuordnen. Der Quotient aus beiden Größen stellt ein Maß für die Härte beziehungsweise die Steifigkeit der Probe dar. Bekannte Indentationsmethoden für Kunststoffe sind beispielsweise die Shore-A-Methode beziehungsweise die Shore-D-Methode. Die Härte von Metallen kann beispielsweise nach Vickers beziehungsweise Brinell ermittelt werden. Dabei werden durch einen Eindringkörper plastische Deformationen erzeugt, die mittels Lichtmikroskopie ausgemessen und aus denen mit Hilfe der Kontaktfläche, der zugehörigen Kraft und Eindringtiefe die Härte bestimmt werden.

Vorzugsweise beträgt die Härte der Klebeschicht maximal 70 Shore-D. Alternativ oder in Ergänzung kann die Härte der Klebeschicht mindestens einen Wert von 40 Shore-D haben. Es versteht sich, dass jeder beliebige Zwischenwert zwischen 40 Shore-D und 70 Shore-D denkbar ist, für besondere Anwendungen gegebenenfalls auch außerhalb dieses Bereichs liegende Härtewerte. In jedem Fall ist das Material der Klebeschicht so gestaltet, dass die Härte der Klebeschicht geringer ist als die Härte des Beschichtungsmaterials der Feder. Die Federbeschichtung hat vorzugsweise eine Härte von mindestens 70 Shore-D.

Es ist nach einer bevorzugten Ausgestaltung weiter vorgesehen, dass die Klebeschicht eine größere Härte aufweist als die Federaufnahme. Vorzugsweise beträgt die Härte der Federaufnahme mindestens 50 Shore-A. Alternativ oder in Ergänzung kann die Federaufnahme eine maximale Härte von 80 Shore-A aufweisen, wobei jeder beliebige Zwischenwert, gegebenenfalls auch größere Werte als 80 Shore-A denkbar sind. Die Federaufnahme besteht vorzugsweise aus einem elastischen Kunststoff, insbesondere einem Elastomer oder einem Elastomer haltigen Kunststoff, beispielsweise einem Kautschuk, wobei prinzipiell auch Thermoplaste oder Duroplaste als Material für die Federaufnahme verwendbar sind.

Insgesamt ist es günstig, dass die Härte der verwendeten Werkstoffe ausgehend von der Feder, die vorzugsweise aus einem härtbaren Federstahl besteht, bis zum elastischen Aufnahmekörper über die zwischengeschalteten Schichten schrittweise abnimmt. Hierdurch kann auch in die Feder eingeleitete Energie stufenweise aufgenommen werden, wobei die elastische Klebeschicht durch Verformung einen Teil der Energie aufnehmen kann. Insgesamt ergibt sich dadurch ein günstiger Dehnungsgradient zwischen den genannten Bauteilen. Insbesondere kann die Feder eine höhere Härte haben als die Federbeschichtung und/oder die Federbeschichtung kann eine höhere Härte haben als die Klebeschicht und/oder die Klebeschicht kann eine höhere Härte haben als die Federaufnahme.

Entsprechend kann nach einer Weiterbildung vorgesehen sein, dass auch die Steifigkeit von der Feder, über die Federbeschichtung, weiter über die Klebeschicht bis zur Federaufnahme abnimmt. Insbesondere kann die Feder eine höhere Steifigkeit haben als die Federbeschichtung und/oder die Federbeschichtung kann eine höhere Steifigkeit haben als die Klebeschicht und/oder die Klebeschicht kann eine höhere Steifigkeit haben als die Federaufnahme.

Umgekehrt kann die Elastizität von der Feder, über die Federbeschichtung, weiter über die Klebeschicht bis zur Federaufnahme zunehmen. Insbesondere kann die Federaufnahme eine höhere Elastizität haben als die Klebeschicht und/oder die Klebeschicht kann eine höhere Elastizität haben als die Federbeschichtung und/oder kann die Federbeschichtung eine höhere Elastizität haben als die Feder.

Entsprechend kann auch die Bruchdehnung von der Feder, über die Federbeschichtung, weiter über die Klebeschicht bis zur Federaufnahme zunehmen. Die Bruchdehnung charakterisiert die Verformungsfähigkeit beziehungsweise Duktilität eines Werkstoffes. Die Bruchdehnung beschreibt die auf die Anfangsmesslänge einer Probe im Zugversuch bezogene bleibende Längenänderung nach erfolgtem Bruch. Insbesondere kann die Federaufnahme eine höhere Bruchdehnung haben als die Klebeschicht und/oder die Klebeschicht kann eine höhere Bruchdehnung haben als die Federbeschichtung und/oder kann die Federbeschichtung eine höhere Bruchdehnung haben als die Feder. Die Klebeschicht hat vorzugsweise eine Bruchdehnung von mindestens 5 %, insbesondere mindestens 50 %, besonders bevorzugt von mindestens 100 %. Eine Obergrenze für die Bruchdehnung der Klebeschicht kann beispielsweise bei maximal 300 % liegen.

Nach einer Ausführungsform kann die Klebeschicht eine Dicke von mindestens 0,1 mm, insbesondere von mindestens 0,5 mm aufweisen. Alternativ oder in Ergänzung kann die Klebeschicht eine Dicke von maximal 3,0 mm, vorzugsweise maximal 1,5 mm, insbesondere von maximal 1,0 mm aufweisen. Besonders günstig für eine sichere Verbindung von Feder und Federaufnahme mit guten Dämpfungseigenschaften ist es, wenn die Klebeschicht eine Dicke von 0,5 bis 0,7 mm hat. Es versteht sich jedoch, dass auch jeder andere Dickenwert zwischen 0,1 mm und 3,0 mm denkbar ist. Als Material für die Klebeschicht kann beispielsweise ein chemisch härtender Klebstoff auf Basis eines Acrylderivats verwendet werden.

Um eine definierte Schichtdicke der Klebeschicht herzustellen können Abstandhalter vorgesehen sein, mit denen eine Oberfläche der Beschichtung und eine Oberfläche der Federaufnahme beabstandet voneinander gehalten werden, wobei der zwischen der Oberfläche der Beschichtung und der Oberfläche der Federaufnahme gebildete Raum zumindest weitestgehend mit der Klebeschicht ausgefüllt ist. Mit zumindest weitestgehend soll insbesondere die Möglichkeit mit umfasst sein, dass der zwischen Federaufnahme und Feder gebildete und mit der Klebeschicht verfüllte Zwischenraum auch fertigungsbedingte Hohlräume beziehungsweise Lufteinschlüsse aufweisen kann. Vorzugsweise ist der Zwischenraum größtenteils, insbesondere zu mindestens 90 % mit Klebeschicht verfüllt.

Die Abstandhalter können nach einer bevorzugten Ausführungsform derart verteilt angeordnet sein, dass die Feder und die Federaufnahme in axiale Richtung und/oder in radiale Richtung, jeweils in Bezug auf die Federachse, relativ zueinander ausgerichtet sind. Insbesondere können mehrere Abstandhalter in Umfangsrichtung entlang der Windung der Feder angeordnet sein. Alternativ oder in Ergänzung können mehrere Abstandhalter, im Querschnitt durch den Federdraht betrachtet, über einen Teilumfang des Federdrahts versetzt zueinander angeordnet sein. Insgesamt kann damit eine Ausrichtung der Feder in radialer und in axialer Richtung relativ zum Aufnahmekörper erreicht werden.

Die Abstandhalter können insbesondere als elastische Körper gestaltet sein, welche eine gewisse elastische Nachgiebigkeit haben. Auf diese Weise kann eine Federaufnahme für Federn mit verschiedenen Drahtdurchmessern verwendet werden. Bei einem Federdraht mit kleinerem Durchmesser kann zwischen den Abstandhaltern und der Feder eine Spiel- oder leichte Presspassung gebildet sein, wobei die Abstandhalter die Feder beabstandet von der Oberfläche des Aufnahmekörpers halten. Bei Verwendung von Federdraht mit größerem Drahtdurchmesser kann zwischen den Abstandhaltern und der Feder eine Presspassung gebildet sein, wobei auch hier die Federoberfläche durch die Abstandhalter von der Oberfläche des Aufnahmekörpers auf Abstand gehalten wird.

Nach einer möglichen Ausgestaltung können die Abstandhalter in Form von Vorsprüngen gestaltet sein, die von der Oberfläche der Federaufnahme abstehen. Vorzugsweise sind die Vorsprünge einteilig mit dem Aufnahmekörper gestaltet, beziehungsweise an diesen angeformt. Für eine gute Abstützung und Krafteinleitung ist es günstig, wenn in einem Zylinderschnitt durch die Federaufnahme mindestens drei Abstandhalter, insbesondere mindestens acht Abstandhalter umfangsverteilt an der Federaufnahme angeordnet sind. Alternativ oder in Ergänzung können in einem Radialschnitt durch die Federaufnahme mindestens drei, insbesondere mindestens vier Abstandhalter entlang der Mulde zur Aufnahme der Feder verteilt sein.

Die Federaufnahme ist vorzugsweise derart gestaltet, dass die Feder, im Radialschnitt durch die Federaufnahme beziehungsweise im Querschnitt durch den Federdraht betrachtet, mit einem Umschlingungswinkelbereich von mindestens 30°, vorzugsweise mindestens 100° und/oder maximal 150° in der Federaufnahme aufgenommen und mittels der Klebeschicht mit der Federaufnahme verbunden ist. Hierdurch werden die zwischen der Feder und der Federaufnahme wirkenden Lasten möglichst gleichmäßig verteilt und eine gute Abstützung erreicht. Insbesondere ist vorgesehen, dass die Klebeschicht in dem genannten Umschlingungswinkelbereich um den Federdraht und/oder in dem Umschlingungswinkelbereich entlang der Federwindung um die Federachse eine im Wesentlichen konstante Dicke aufweist. Mit im Wesentlichen konstanter Dicke sollen gewisse fertigungsbedingte Toleranzen der Klebeschichtdicke von ± 10% mit umfasst sein.

Die Feder kann in Form einer Schraubenfeder gestaltet sein, die einen wendelförmig gewundenen Draht aufweist. Dabei ist ein Endabschnitt der Schraubenfeder, welcher sich in Axialansicht beispielsweise um 180° bis 360° um die Federachse erstrecken kann, in der Federaufnahme aufgenommen. Dabei ist die Kontur der Federaufnahme vorzugsweise an die Querschnittsform der Feder angepasst, so dass diese sicher relativ miteinander verbunden sind. Dies gilt vorzugsweise für jeden verwendeten Federtyp, das heißt auch andere Federn als Schraubenfedern. Die Schraubenfeder kann beispielsweise zylindrisch oder konisch gestaltet sein. Die Federmittellinie der Schraubenfeder, die als Summe aller Mittelpunkte einer Einhüllenden der Schraubenfeder definiert werden kann, kann in einer oder mehreren Dimensionen gekrümmt sein, beispielsweise C-förmig und/oder S-förmig. Die Schraubenfeder kann ferner einen veränderlichen Drahtdurchmesser, eine variabler Steigung und/oder einen sich über der Länge verändernden Federdurchmesser haben. Es versteht sich, dass die Federanordnung prinzipiell auch jede beliebige andere Feder aufweisen kann. Insbesondere kann die Federanordnung jede beliebige beschichtete Feder aufweisen, für die eine zwischen der beschichteten Feder und der elastischen Federaufnahme angeordnete Klebeschicht aus elastischem Material technische Vorteile erwarten lassen. Beispielsweise kann die Feder der Federanordnung auch in Form einer Blattfeder, Bügelfeder, Wellfeder oder Tellerfeder gestaltet sein.

Die Lösung besteht weiter in einem Verfahren zur Herstellung einer Federanordnung mit einer Feder und einer Federaufnahme, die insbesondere eine oder mehrere der oben genannten Ausgestaltungen aufweisen kann, mit den Schritten: Bereitstellen einer Federaufnahme aus einem Elastomer haltigen Kunststoff mit einer ersten Härte; Bereitstellen eines Klebstoffs, der in ausgehärtetem Zustand eine zweite Härte hat, die größer ist als die erste Härte der Federaufnahme; Bereitstellen einer Feder mit einer Beschichtung mit einer dritten Härte, die größer ist als die zweite Härte des Klebstoffs; Auftragen des Klebstoffs auf die Federaufnahme; und Aufsetzen der Feder auf die mit Klebstoff versehene Federaufnahme derart, dass eine Oberfläche der Beschichtung und eine Oberfläche der Federaufnahme beabstandet voneinander gehalten werden.

Mit dem Verfahren werden dieselben Vorteile erreicht wie mit der oben genannten Anordnung, so dass diesbezüglich zur Vermeidung von Wiederholungen auf die obige Beschreibung Bezug genommen wird. Es versteht sich, dass alle erzeugnisbezogenen Merkmale sinngemäß für das Verfahren gelten und, dass umgekehrt alle verfahrensbezogenen Merkmale sinngemäß für das Erzeugnis gelten.

Für die Federaufnahme wird insbesondere ein Elastomer haltiger Kunststoff mit einer Härte von mindestens 50 Shore-A und/oder von maximal 80 Shore-A verwendet. Alternativ oder in Ergänzung wird ein Klebstoff verwendet der eine Härte von vorzugsweise mindestens 40 Shore-D und/oder maximal 70 Shore-D hat. Alternativ oder in Ergänzung kann die Beschichtung eine Härte von mindestens 70 Shore-D haben.

Nach einer bevorzugten Verfahrensführung wird die Feder nach Auftragen des Klebstoffs auf die Federaufnahme im Wesentlichen drucklos gegenüber der Federaufnahme gehalten. Mit im Wesentlichen drucklos soll insbesondere mit umfasst sein, dass die Feder aufgrund ihres Eigengewichts und gegebenenfalls des Eigengewichts eines Ausrichteelements, mit dem die Feder für die Zeit des Aushärtens des Klebstoffs gegenüber der Federaufnahme ausgerichtet wird, an die Federaufnahme angedrückt wird. Das Aushärten des Klebstoffs erfolgt insbesondere bei Raumtemperatur.

Eine erfindungsgemäße Federanordnung mit einer Schraubenfeder als Feder kann insbesondere für ein Fahrwerk eines Kraftfahrzeugs verwendet werden. Für diese Verwendung werden die Schraubenfedern auch als Achsfedern oder Fahrwerksfedern bezeichnet. In diesem Fall wird die Federaufnahme, die auch als Federunterlage bezeichnet werden kann, gegen einen Federteller des Fahrwerks beziehungsweise der Karosserie abgestützt.

Ein bevorzugtes Ausführungsbeispiel wird nachstehend anhand der Zeichnungsfiguren erläutert. Hierin zeigt:
- Figur 1: eine erfindungsgemäße Federlageranordnung mit einer Feder und einer Federaufnahme in perspektivischer Darstellung;
- Figur 2: einen Radialschnitt durch die Federlageranordnung gemäß Figur 1 durch eine Schnittebene zwischen benachbarten Abstandhaltern der Federaufnahme;
- Figur 3: ein Detail der Federaufnahme der Federanordnung aus Figur 1 in dreidimensionaler Darstellung;
- Figur 4: einen Radialschnitt durch die Federaufnahme aus Figur 1 durch eine Schnittebene mit Abstandhaltern;
- Figur 5: schematisch einen Radialschnitt durch eine Federaufnahme für eine erfindungsgemäße Federlageranordnung.

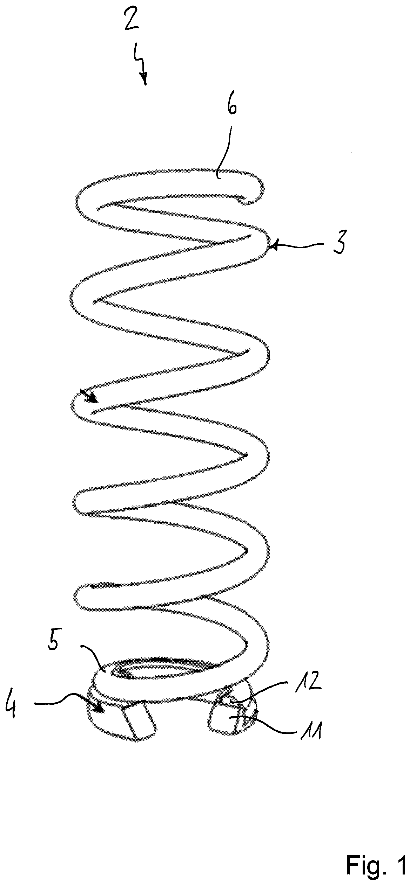

Die Figuren 1 bis 5 werden nachstehend gemeinsam beschrieben. Es ist eine erfindungsgemäße Federlageranordnung 2 gezeigt, die eine Feder 3 und eine Federaufnahme 4 aufweist, mit dem ein Endabschnitt 5 der Feder 3 verbunden ist. Die Feder 3 besteht aus einem geeigneten Federmaterial, insbesondere aus einem gehärteten Federstahl, wobei prinzipiell auch andere Federwerkstoffe wie faserverstärktes Kunststoffmaterial ebenso denkbar sind. Die Federaufnahme 4 besteht aus einem elastischen Material, insbesondere aus einem Elastomer haltigen Kunststoffmaterial beziehungsweise Gummi.

Die Feder 3 ist in Form einer Schraubenfeder gestaltet, die einen um eine Federmittellinie gewundenen Federdraht aufweist. An ihrem dem ersten Endabschnitt 5 entgegengesetzten Ende hat die Schraubenfeder 3 einen zweiten Endabschnitt 6, der in einer zweiten Federaufnahme (nicht dargestellt) aufgenommen werden kann. Die gezeigte Federanordnung 2 kann insbesondere in einem Fahrwerk eines Kraftfahrzeugs verwendet werden, wobei die Federanordnung in diesem Fall im Zusammenwirken mit einem Stoßdämpfer vertikale Bewegungen des Fahrzeugs abfedert beziehungsweise dämpft.

Die Feder 3 ist mit einer Beschichtung 7 versehen, welche die Feder vor Steinschlag und Korrosion schützen soll. Die Beschichtung 7 kann im Wege der Pulverbeschichtung auf die Feder 3 aufgebracht werden. Hierfür kann nach einer möglichen Ausgestaltung eine Einfachbeschichtung verwendet werden, wobei die Feder zunächst zinkphosphatiert und anschließend pulverlackiert wird. Für besonders hohe Ansprüche kann auch eine Doppelbeschichtung verwendet werden, wobei auf eine Zink-Phosphatschicht eine dünne Basisschicht (Base-Coat) und danach eine dickere energieabsorbierende Außenschicht (Top-Coat) aufgebracht wird. Es versteht sich, dass auch andere Beschichtungen aus anderen geeigneten Beschichtungsmaterialien denkbar sind.

Die beschichtete Feder 3 (Beschichtung 7) ist mittels einer Klebeschicht 8 mit der Federaufnahme 4 verklebt. Die Klebeschicht 8 hat eine geringere Härte als die Beschichtung 7. Insbesondere ist vorgesehen, dass die Federbeschichtung eine Härte von mindestens 70 Shore-D aufweist. Dementsprechend beträgt die Härte der Klebeschicht 8 maximal 70 Shore-D. Damit die Klebeschicht 8 eine ausreichende Festigkeit hat und keine ungewünschte Schwachstelle in der Anordnung bildet, sollte als untere Grenze für die Härte der Klebeschicht 8 vorzugsweise ein Wert von 40 Shore-D nicht unterschritten werden. Als Material für die Klebeschicht 8 kann beispielsweise ein chemisch härtender Klebstoff auf Basis eines Acrylderivats verwendet werden, insbesondere auf Basis von Methylmethacrylat.

Es ist weiter vorgesehen, dass die Klebeschicht 8 eine größere Härte aufweist als die Federaufnahme 4, wobei für letztere eine Obergrenze von vorzugsweise 80 Shore-A eingehalten werden sollte. Für eine ausreichende Festigkeit der Federaufnahme 4 ist es günstig, wenn diese eine Härte von mindestens 50 Shore-A aufweist.

Insgesamt ergibt sich durch diese Ausgestaltung, dass die Härte der verwendeten Werkstoffe ausgehend von der Feder 3 über die Federbeschichtung 7, die Klebeschicht 8 bis zum elastischen Aufnahmekörper 4 schrittweise abnimmt. Hierdurch kann in die Feder 3 eingeleitete Energie stufenweise aufgenommen werden, wobei die elastische Klebeschicht 8 durch elastische Verformung einen Teil der Energie aufnehmen kann. Alternativ oder ergänzend kann auch vorgesehen sein, dass die Steifigkeit von der Feder 3, über die Federbeschichtung 7, weiter über die Klebeschicht 8 bis zur Federaufnahme 4 abnimmt.

Umgekehrt kann die Elastizität des verwendeten Materials von der Feder 3, über die Federbeschichtung 7, weiter über die Klebeschicht 8 bis zur Federaufnahme 4 zunehmen. Alternativ oder ergänzend kann auch vorgesehen sein, dass die Bruchdehnung von der Feder 3, über die Federbeschichtung 7, weiter über die Klebeschicht 8 bis zur Federaufnahme 4 zunimmt. Die Bruchdehnung ist ein Maß für die Verformungsfähigkeit beziehungsweise Duktilität eines Werkstoffes. Insbesondere ist der Werkstoff der Klebeschicht derart gestaltet, dass diese in ausgehärtetem Zustand eine Bruchdehnung von mindestens 5 %, insbesondere von mindestens 50 %, vorzugsweise mindestens 100 % aufweist.

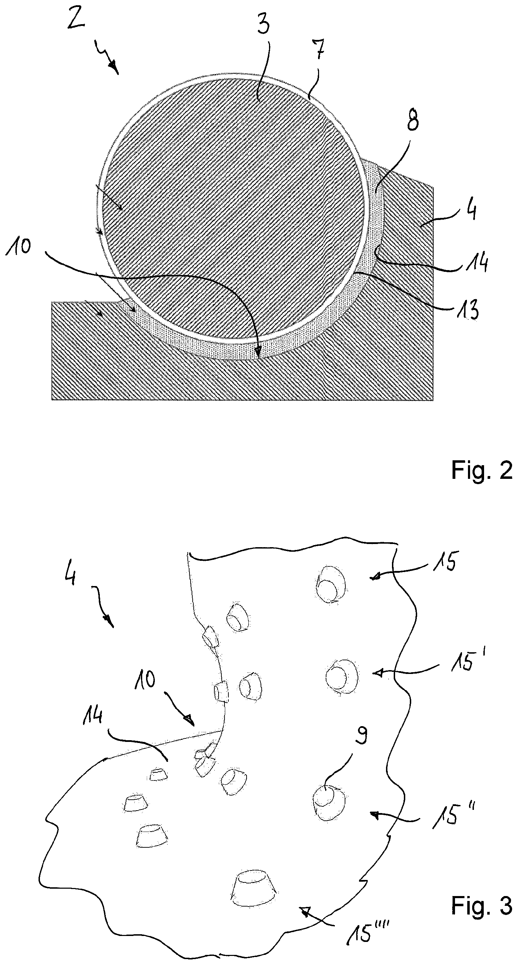

Wie insbesondere aus Figur 2 hervorgeht, hat die Klebeschicht 8 eine größere Dicke als die Beschichtung 7. Dabei kann die Dicke der Klebeschicht 8 beispielsweise zwischen 0,5 mm und 0,7 mm liegen, wobei es sich versteht, dass auch kleinere oder größere Klebeschichtdicken verwendbar sind. Insbesondere kann bei Verwendung einer Doppelbeschichtung der Feder (Dual-Coat), die Dicke der Federbeschichtung 7, welche 0,5 mm und mehr betragen kann, auch größer sein als die der Klebeschicht 8.

Die Federaufnahme 4 ist ringförmig, respektive ringsegmentförmig gestaltet und weist eine Längsachse auf, die in montiertem Zustand der Federachse zumindest angenähert ist. Die Federaufnahme 4 hat eine Mulde 10, die sich in Umfangsrichtung um die Längsachse der Federaufnahme 4 erstreckt und in welcher der gewundene Endabschnitt 6 der Feder 3 aufgenommen ist. Dabei ist die Form der Mulde 10, insbesondere auch die axiale Steigung der Mulde entlang der Umfangserstreckung, an die Form der Feder 3 beziehungsweise Steigung der Endwindung angepasst. Am Ende der Mulde 10 ist ein Anschlag 11 gebildet, gegen das ein stirnseitiges Ende 12 der Feder 3 in Umfangsrichtung abgestützt ist.

Um eine möglichst einheitliche Schichtdicke der Klebeschicht 8 im gesamten Verbindungsbereich zwischen der beschichteten Feder 3 und der Federaufnahme 4 zu gewährleisten, weist die Federaufnahme 4 eine Vielzahl von Abstandhaltern 9 auf. Die Abstandhalber 9 sind derart verteilt angeordnet, dass die Feder 3 gegenüber der Federaufnahme 4 in axiale Richtung und in radiale Richtung ausgerichtet ist, wobei sich die Angaben axial und radial auf die Federachse beziehungsweise die Achse der Federaufnahme 4 beziehen. Hierfür sind, wie insbesondere aus Figur 3 hervorgeht, eine Vielzahl von Abstandhaltern entlang der Umfangserstreckung sowie entlang der Radialerstreckung der Mulde 10 vorgesehen, in der der Endabschnitt 6 der Feder 3 aufgenommen ist.

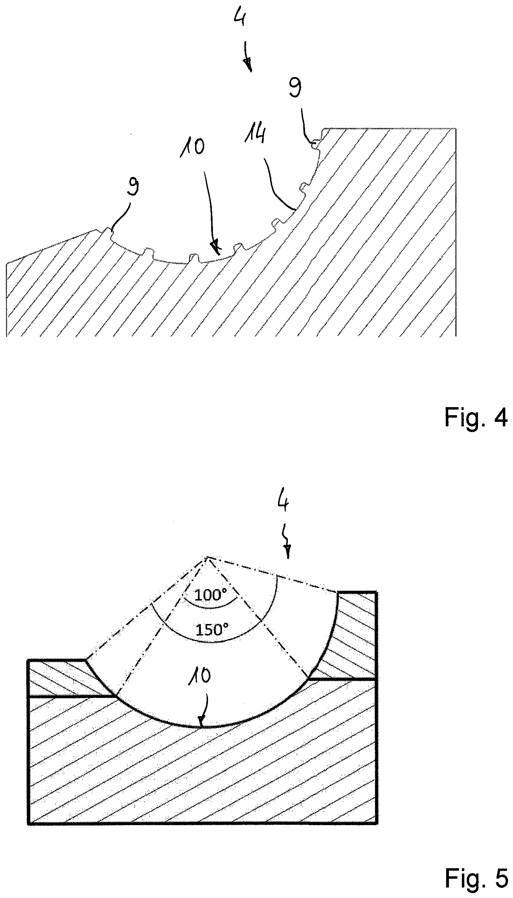

Durch die Abstandhalter 9 wird eine Oberfläche 13 der Beschichtung 6 und eine Oberfläche 14 der Federaufnahme 4 beabstandet voneinander gehalten, wobei der zwischen der Oberfläche 13 der Beschichtung und der Oberfläche 14 der Federaufnahme 4 gebildete Spalt mit der Klebeschicht 8 ausgefüllt ist. Auf diese Weise sind die Feder 3 und die Federaufnahme 4 fest miteinander verklebt und bilden eine Baueinheit. Die Abstandhalter 9 sind, wie insbesondere aus Figur 3 hervorgeht, in Form von Noppen gestaltet, die einteilig mit dem Aufnahmekörper 4 ausgebildet sind und von der Muldenoberfläche 14 abstehen. Die Abstandhalter 9 sind in mehreren Reihen 15, 15', 15", etc. umfangsverteilt angeordnet. Wie aus Figur 4 hervorgeht, sind in einem Radialschnitt durch den Aufnahmekörper 4 mehrere Reihen 15 von Abstandhaltern 9 vorgesehen. Es versteht sich, dass auch eine andere Anzahl als die verwendeten sieben Noppenreihen verwendet werden können, oder dass die Abstandhalter 9 auch unregelmäßig auf der Muldenoberfläche 14 verteilt sein können. Günstig ist jedenfalls, wenn die Abstandhalter so verteilt sind, dass eine Ausrichtung der Feder 3 in radialer und in axialer Richtung relativ zum Aufnahmekörper 4 erreicht wird.

Die Höhe der einzelnen Abstandhalter 9 definiert zumindest etwa die Dicke des zwischen der Muldenoberfläche 14 und der Federoberfläche 13 gebildeten Spalts und damit auch die Schichtdicke der Klebeschicht 8. Insofern haben die Abstandhalter vorzugsweise eine Höhe von 0,5 bis 0,7 mm, wobei andere Größen ebenso möglich sind. Die Abstandhalter 9 sind für eine gute Entformbarkeit vorzugsweise derart gestaltet, dass sie sich von der Muldenoberfläche 14 in Richtung zu ihrem Ende verjüngen. Vorliegend sind die Abstandhalter 9 etwa kegelstumpfförmig gestaltet, wobei eine kugelige Form ebenso denkbar wäre. Die Abstandhalter 9 sind aus dem elastischen Material des Aufnahmekörpers 4 hergestellt, so dass die Federaufnahme 4 für verschiedene Federn 3 mit unterschiedlichen Drahtdurchmessern verwendet werden können.

Wie insbesondere aus Figur 5 hervorgeht, ist die Federaufnahme 4 vorzugsweise derart gestaltet, dass die Feder 3, im Radialschnitt durch die Federaufnahme 4 beziehungsweise im Querschnitt durch den Federdraht betrachtet, mit einem Umschlingungswinkel von mindestens 30°, vorzugsweise mindestens 100° und/oder maximal 150° in der Federaufnahme 4 aufgenommen ist. Hierdurch werden die zwischen der Feder 3 und der Federaufnahme 4 wirkenden Lasten möglichst gleichmäßig verteilt und es wird eine gute Abstützung der Federkräfte erreicht.

Ein Verfahren zur Herstellung der erfindungsgemäßen Federanordnung 2 kann folgende Verfahrensschritte umfassen: Bereitstellen einer Federaufnahme 4 aus einem Elastomer haltigen Kunststoff; Bereitstellen eines Klebstoffs, wobei der Klebstoff härter ist als die Federaufnahme 4; Bereitstellen einer Feder 3 mit einer Beschichtung 7, wobei die Beschichtung 7 härter ist als der Klebstoff; Auftragen des Klebstoffs auf die Federaufnahme 4; und Aufsetzen der Feder 3 auf die mit Klebstoff versehene Federaufnahme 4 derart, dass die Oberfläche 13 der Beschichtung 7 und die Oberfläche 14 der Federaufnahme 4 beabstandet voneinander gehalten werden.

Nach Auftragen des Klebstoffs auf die Federaufnahme 4 wird die Feder 3 auf die Federaufnahme 4 aufgesetzt und für die Zeit des Aushärtens des Klebstoffs gegenüber dieser fixiert, beziehungsweise gehalten. Das Aushärten des Klebstoffs erfolgt insbesondere bei Raumtemperatur. Der ausgehärtete Klebstoff bildet dann die Klebeschicht 8, welche die Feder 3 mit der Federaufnahme fest verbindet. Die Klebeverbindung ist insbesondere derart, dass sie nicht mehr zerstörungsfrei lösen lässt.

Ein Vorteil der Federanordnung 2 besteht darin, dass die Klebeschicht 8 sich elastisch verformen und einen Teil der in das System eingeleiteten Energie durch elastische Deformation aufnehmen kann. Die Spannungen in den Grenzschichten der miteinander verbundenen Materialien beziehungsweise Bauteile sind somit geringer, so dass auch ein bei Betrieb der Federanordnung 2 auftretender belastungsbedingter Verschleiß gering ist.

### Bezugszeichenliste

- 2: Federanordnung
- 3: Feder
- 4: Federaufnahme
- 5: Endabschnitt
- 6: Endabschnitt
- 7: Beschichtung
- 8: Klebeschicht
- 9: Abstandhalter
- 10: Mulde
- 11: Anschlag
- 12: Ende
- 13: Oberfläche
- 14: Oberfläche
- 15: Reihe

- A: Achse

## Patentansprüche

1. Federanordnung umfassend:
eine Feder (3) mit einer Beschichtung (7),
eine Federaufnahme (4), die aus einem Kunststoff besteht,
eine Klebeschicht (8), mit der die Feder (3) und die Federaufnahme (4) miteinander klebend verbunden sind,
**dadurch gekennzeichnet, dass** die Härte der Klebeschicht (8) geringer ist als die Härte der Beschichtung (7) der Feder (3).

2. Federanordnung nach Anspruch 1,
**dadurch gekennzeichnet,**
**dass** die Härte der Klebeschicht (8) größer ist als die Härte der Federaufnahme (4).

3. Federanordnung nach Anspruch 1 oder 2,
**dadurch gekennzeichnet,**
**dass** die Härte der Klebeschicht (8) mindestens 40 Shore-D und/oder maximal 70 Shore-D beträgt.

4. Federanordnung nach einem der Ansprüche 1 bis 3,
**dadurch gekennzeichnet,**
**dass** die Klebeschicht (8) eine Bruchdehnung von mindestens 5 %, insbesondere von mindestens 50 %, vorzugsweise von mindestens 100 % aufweist.

5. Federanordnung nach einem der Ansprüche 1 bis 4,
**dadurch gekennzeichnet,**
**dass** die Härte der Beschichtung (7) mindestens 70 Shore-D beträgt.

6. Federanordnung nach einem der Ansprüche 1 bis 5,
**dadurch gekennzeichnet,**
**dass** die Härte der Federaufnahme (4) mindestens 50 Shore-A und/oder maximal 80 Shore-A beträgt.

7. Federanordnung nach einem der Ansprüche 1 bis 6,
**dadurch gekennzeichnet,**
**dass** die Klebeschicht (8) eine Dicke von mindestens 0,1 mm und maximal 3,0 mm, insbesondere von mindestens 0,5 mm und maximal 1,0 mm, aufweist.

8. Federanordnung nach einem der Ansprüche 1 bis 7,
**dadurch gekennzeichnet,**
**dass** Abstandhalter (9) vorgesehen sind, mit denen eine Oberfläche (13) der Beschichtung (7) und eine Oberfläche (14) der Federaufnahme (4) beabstandet voneinander gehalten werden, wobei der zwischen der Oberfläche (13) der Beschichtung (7) und der Oberfläche (14) der Federaufnahme (4) gebildete Raum zumindest weitestgehend mit der Klebeschicht (8) ausgefüllt ist.

9. Federanordnung nach Anspruch 8,
**dadurch gekennzeichnet,**
**dass** die Abstandhalter (9) derart verteilt angeordnet sind, dass die Feder (3) und die Federaufnahme (4) in axiale Richtung und/oder in radiale Richtung in Bezug auf die Federachse (A) relativ zueinander ausgerichtet sind.

10. Federanordnung nach Anspruch 8 oder 9,
**dadurch gekennzeichnet,**
**dass** die Abstandhalter (9) in Form von Vorsprüngen gestaltet sind, die von der Oberfläche (14) der Federaufnahme (4) abstehen.

11. Federanordnung nach einem der Ansprüche 8 bis 10,
**dadurch gekennzeichnet,**
**dass** mehrere Abstandhalter (9) in Umfangsrichtung entlang der Windung der Feder (3) und/oder über einen Teilumfang des Federdrahts versetzt zueinander angeordnet sind.

12. Federanordnung nach einem der Ansprüche 1 bis 11,
**dadurch gekennzeichnet,**
**dass** die Federaufnahme (4) derart gestaltet ist, dass die Feder (3), im Querschnitt durch den Federdraht betrachtet, über einen Umschlingungswinkelbereich von mindestens 30°, vorzugsweise von mindestens 100° in der Federaufnahme (4) aufgenommen und mittels der Klebeschicht (8) mit der Federaufnahme (4) verbunden ist, wobei die Klebeschicht (8) in dem Umschlingungsbereich im Wesentlichen eine konstante Dicke hat.

13. Verfahren zur Herstellung einer Federanordnung mit einer Feder und einer Federaufnahme, insbesondere gemäß einem der Ansprüche 1 bis 12, mit den Schritten:
Bereitstellen einer Federaufnahme (4) aus einem Kunststoff mit einer ersten Härte,
Bereitstellen eines Klebstoffs, der in ausgehärtetem Zustand eine zweite Härte aufweist, die größer ist als die erste Härte der Federaufnahme (4),
Bereitstellen einer Feder (3) mit einer Beschichtung (7) mit einer dritten Härte,
die größer ist als die zweite Härte des Klebstoffs,
Auftragen des Klebstoffs auf die Federaufnahme (4),
Aufsetzen der Feder (3) auf die mit Klebstoff versehene Federaufnahme (4) derart, dass eine Oberfläche (13) der Beschichtung (7) und eine Oberfläche (14) der Federaufnahme (4) beabstandet voneinander gehalten werden.

14. Verfahren nach Anspruch 13, **dadurch gekennzeichnet,**
**dass** für die Federaufnahme (4) ein Kunststoff mit einer ersten Härte von mindestens 50 Shore-A und maximal 80 Shore-A verwendet wird,
**dass** ein Klebstoff mit einer zweiten Härte von mindestens 40 Shore-D und/oder maximal 70 Shore-D verwendet wird, und/oder
**dass** eine Beschichtung (7) mit einer dritten Härte von mindestens 70 Shore-D verwendet wird.

15. Verfahren nach Anspruch 13 oder 14,
**dadurch gekennzeichnet,**
**dass** das Anhaften des Klebstoffs im Wesentlichen drucklos erfolgt und/oder dass das Anhaften des Klebstoffs bei Raumtemperatur erfolgt.

## Claims

1. A spring assembly comprising:
a spring (3) with a coating (7),
a spring retainer (4) made of plastic material,
an adhesive layer by which the spring (3) and the spring retainer (4) are adhesively connected to one another,
**characterised in**
**that** the hardness of the adhesive layer (8) is lower than the hardness of the coating (7) of the spring (3).

2. Spring assembly according to claim 1,
**characterised in**
**that** the hardness of the adhesive layer (8) is greater than the hardness of the spring retainer (4).

3. Spring assembly according to any one of claims 1 or 2,
**characterised in**
**that** the hardness of the adhesive layer (8) amounts to at least 40 Shore-D and/or at most 70 Shore-D.

4. Spring assembly according to claims 1 to 3,
**characterised in**
**that** the adhesive layer (8) comprises an elongation at failure of at least 5%, in particular of at least 50%, preferably of at least 100%.

5. Spring assembly according to any one of claims 1 to 4,
**characterised in**
**that** the hardness of the coating (7) amounts to at least 70 Shore-D.

6. Spring assembly according to any one of claims 1 to 5,
**characterised in**
**that** the hardness of the spring retainer (4) amounts to at least 50 Shore-A and/or at most 80 Shore-A.

7. Spring assembly according to any one of claims 1 to 6,
**characterised in**
**that** the adhesive layer (8) comprises a thickness of at least 0.1 mm and at most 3.0 mm, in particular at least 0.5 mm and at most 1.00 mm.

8. Spring assembly according to any one of claims 1 to 7,
**characterised in**
**that** spacers (9) are provided by which a surface (13) of the coating (7) and a surface (14) of the spring retainer (4) are held at a distance from one another, wherein the space formed between the surface (13) of the coating (7) and the surface (14) of the spring retainer (4) is at least largely filled with the adhesive layer (8).

9. Spring assembly according to claim 8,
**characterised in**
**that** the spacers (9) are distributed such that the spring (3) and the spring retainer (4) are axially and/or radially aligned relative to one another with reference to the spring axis (A).

10. Spring assembly according to claim 8 or 9,
**characterised in**
**that** the spacers (9) are provided in the form of projections which project from the surface (14) of the spring retainer (4) .

11. Spring assembly according to any one of claims 8 to 10,
**characterised in**
**that** a plurality of spacers (9) are arranged so as to be offset relative to one another in the circumferential direction along the winding of the spring (3) and/or along part of the circumference of the spring wire.

12. Spring assembly according to any one of claims 1 to 11,
**characterised in**
**that** the spring retainer (4) is designed such that the spring (3), if viewed in the cross-section through the spring wire, is received in the spring retainer (4) over a wrap angle range of at least 30°, preferably of at least 100°, and is connected to the spring retainer (4) via the adhesive layer (8), wherein the adhesive layer (8) in the wrap angle range comprises a substantially constant thickness.

13. A process of producing a spring assembly with a spring and a spring retainer, in particular according to any one of claims 1 to 12, comprising the steps:
providing a spring retainer (4) made of plastic material with a first hardness;
providing an adhesive which in a hardened condition comprises a second hardness that is greater than the first hardness of the spring retainer (4);
providing a spring (3) with a coating (7) with a third hardness which is greater than the second hardness of the adhesive;
applying the adhesive to the spring retainer (4);
positioning the spring (3) on the spring retainer (4) provided with the adhesive such that a surface (13) of the coating (7) and a surface (14) of the spring retainer (4) are held so as to be spaced from one another.

14. Process according to claim 13,
**characterised in**
**that** for the spring retainer (4) a plastic material is used with a first hardness of at least 50 Shore-A and at most 80 Shore-A,
**that** an adhesive is used with a second hardness of at least 40 Shore-D and/or at most 70 Shore-D, and/or
**that** a coating (7) is used with a third hardness with at least 70 Shore-D.

15. Process according to any one of claims 13 to 14,
**characterised in**
**that** the step of applying the adhesive takes place at room temperature.

## Revendications

1. Système de ressort comprenant :
un ressort (3) avec un revêtement (7),
un logement de ressort (4), qui est composé de matière plastique,
une couche de colle (8) avec laquelle le ressort (3) et le logement de ressort (4) sont reliés entre eux par collage,
**caractérisé en ce que** la dureté de la couche de colle (8) est inférieure à la dureté du revêtement (7) du ressort (3).

2. Système de ressort selon la revendication 1, **caractérisé en ce que** la dureté de la couche de colle (8) est supérieure à la dureté du logement de ressort (4) .

3. Système de ressort selon la revendication 1 ou 2, **caractérisé en ce que** la dureté de la couche de colle (8) est d'au moins 40 Shore-D et/ou au maximum de 70 Shore-D.

4. Système de ressort selon l'une quelconque des revendications 1 à 3, **caractérisé en ce que** la couche de colle (8) comporte un allongement à la rupture d'au moins 5%, notamment d'au moins 50%, de préférence d'au moins 100%.

5. Système de ressort selon l'une quelconque des revendications 1 à 4, **caractérisé en ce que** la dureté du revêtement (7) est d'au moins 70 Shore-D.

6. Système de ressort selon l'une quelconque des revendications 1 à 5, **caractérisé en ce que** la dureté du logement de ressort (4) est d'au moins 50 Shore-A et/ou au maximum de 80 Shore-A.

7. Système de ressort selon l'une quelconque des revendications 1 à 6, **caractérisé en ce que** la couche de colle (8) comporte une épaisseur d'au moins 0,1 mm et au maximum de 3,0 mm, notamment d'au moins 0,5 mm et au maximum de 1,0 mm.

8. Système de ressort selon l'une quelconque des revendications 1 à 7, **caractérisé en ce que** des écarteurs (9) sont prévus avec lesquels une surface (13) du revêtement (7) et une surface (14) du logement de ressort (4) sont maintenues à distance l'une de l'autre, l'espace formé entre la surface (13) du revêtement (7) et la surface (14) du logement de ressort (4) est remplie au moins largement avec la couche de colle (8).

9. Système de ressort selon la revendication 8, **caractérisé en ce que** les écarteurs (9) sont disposés répartis de telle sorte que le ressort (3) et le logement de ressort (4) sont orientés l'un par rapport à l'autre en direction axiale et/ou en direction radiale en référence à l'axe du ressort (A).

10. Système de ressort selon la revendication 8 ou 9, **caractérisé en ce que** les écarteurs (9) sont structurés sous la forme de saillies qui se dressent de la surface (14) du logement de ressort (4).

11. Système de ressort selon l'une quelconque des revendications 8 à 10, **caractérisé en ce que** plusieurs écarteurs (9) sont disposés décalés l'un par rapport à l'autre en direction périphérique le long des spires du ressort (3) et/ou sur une périphérie partielle du fil de ressort.

12. Système de ressort selon l'une quelconque des revendications 1 à 11, **caractérisé en ce que** le logement de ressort (4) est structuré de telle sorte que le ressort (3), considéré en coupe transversale par le fil de ressort, est logé sur une zone angulaire d'enroulement d'au moins 30°, de préférence d'au moins 100° dans le logement de ressort (4) et est relié au logement de ressort (4) au moyen de la couche de colle (8), la couche de colle (8) ayant pour l'essentiel une épaisseur constante dans la zone d'enroulement.

13. Procédé de fabrication d'un système de ressort avec un ressort et un logement de ressort, notamment selon l'une quelconque des revendications 1 à 12, avec les étapes de :
préparation d'un logement de ressort (4) en matière plastique avec une première dureté,
préparation d'une colle qui comporte à l'état durci une deuxième dureté qui est supérieure à la première dureté du logement de ressort (4),
préparation d'un ressort (3) avec un revêtement (7) avec une troisième dureté qui est supérieure à la deuxième dureté de la colle,
application de la colle sur le logement de ressort (4), mise en place du ressort (3) sur le logement de ressort (4) doté de colle de sorte qu'une surface (13) du revêtement (7) et une surface (14) du logement de ressort (4) sont maintenues à distance l'une de l'autre.

14. Procédé selon la revendication 13, **caractérisé en ce que** pour le logement de ressort (4), on utilise une matière plastique avec une première dureté d'au moins 50 Shore-A et au maximum de 80 Shore-A,
**en ce qu'**on utilise une colle avec une deuxième dureté d'au moins 40 Shore-D et/ou au maximum de 70 Shore-D, et/ou
**en ce qu'**on utilise un revêtement (7) avec une troisième dureté d'au moins 70 Shore-D.

15. Procédé selon la revendication 13 ou 14, **caractérisé en ce que** l'adhérence de la colle a lieu pour l'essentiel sans pression et/ou **en ce que** l'adhérence de la colle a lieu à température ambiante.
